# EUROPEAN PATENT SPECIFICATION

(11) **EP 4 455 637 B1**
(45) Date of publication and mention of the grant of the patent: **23.07.2025**
(21) Application number: 23169993.5
(22) Date of filing: 26.04.2023
(51) Int. Cl.: G01N 21/03, G01N 21/17

(54) **HERMETIC SAMPLE HOLDER FOR ELECTRO-OPTICAL MEASUREMENTS IN AN INERT ATMOSPHERE AND METHOD OF SWITCHING OF ELECTRICAL CONTACTS ON A SAMPLE WITHOUT VIOLATION OF THE HERMETIC SEAL OF THE SAMPLE HOLDER**
HERMETISCHER PROBENHALTER FÜR ELEKTROOPTISCHE MESSUNGEN IN INERTER ATMOSPHÄRE UND VERFAHREN ZUM SCHALTEN ZWISCHEN ELEKTRISCHEN KONTAKTEN AUF EINER PROBE OHNE VERLETZUNG DER HERMETISCHEN ABDICHTUNG DES PROBENHALTERS
PORTE-ÉCHANTILLON HERMÉTIQUE POUR MESURES ÉLECTRO-OPTIQUES DANS UNE ATMOSPHÈRE INERTE ET PROCÉDÉ DE COMMUTATION DE CONTACTS ÉLECTRIQUES SUR UN ÉCHANTILLON SANS VIOLER L'ÉTANCHÉITÉ DU PORTE-ÉCHANTILLON

(43) Date of publication of application: 30.10.2024
(73) Proprietor: Valstybinis moksliniu tyrimu institutas Fiziniu ir technologijos mokslu centras, 10257 Vilnius (LT)
(72) Inventor: Gulbinas, Vidmantas, Vilnius (LT); Dementjev, Andrej, Vilnius (LT); Klepeckas, Titas, Vilnius (LT)
(74) Representative: Pakeniene, Ausra

(56) References cited:
- US-A1- 2023 055 246
- US-B2- 8 087 309

## Description

### TECHNICAL FIELD

The invention relates to a hermetic sample holder for electro-optical measurements supporting switching of electrical contacts on a multielectrode sample without opening the sample holder.

### BACKGROUND ART

There are a variety of circumstances in which samples sensitive to ambient atmosphere should remain in an inert environment, and at the same time, there should be a possibility of switching between electrical contacts on the sample during electro-optical measurements. Therefor there is a need for special sample holder with such properties. The transfer of the sample to sealed glovebox to switch contacts is an alternative way, but it requires extra time which is not always suitable and sometimes unacceptable. The ability to switch electrical contacts on a sample using such specialized sample holder has a great advantage and makes electro-optical measurements much more convenient and fast.

US patent No.: US7491934B2 discloses SEM techniques for imaging and measuring electronic transport in nanocomposites based on electric field induced contrast. For this a special hermetic sample holder for a scanning electron microscope is used. The holder includes an electrical interconnect and leads on top of the sample holder electrically connected to a power source for applying voltage to the sample holder to control the secondary electron emission from a sample mounted on the sample holder.

US patent No.: US8087309B2 discloses a hermetic sample holder for use in performing microanalysis of a sample under a controlled atmosphere environment. The sample holder is designed for applications such as analysing very reactive samples or samples that need to be retained in pristine condition. The sample holder comprises a sample holder body and a special cover movably mounted to the holder body for sealing the holder cavity. Disclosed sample holder is intended for use in SEM analysis with major types of SEMs.

Main drawback of both above mentioned prior art objects is that the sample holder does not comprise switching between electrical contacts during measurement session. Also, the built-in electrical connector with its contact geometry imposes restrictions on the contact configuration on the sample.

US patent application No.: US17/797,848 (publication No.: US2023/055246A1) discloses a test cell for operando testing. The test cell comprises: a housing assembly defining at least a portion of an inner chamber; a window coupled to said housing assembly and defining another portion of the inner chamber; and at least one port for accommodating an electrode and/or conductive wire in communication with the inner chamber. The inner chamber is configured for receiving one or more samples undergoing a chemical and/or electrochemical reaction therein. The port is sealable to hermetically seal the inner chamber.

The present invention is dedicated to overcoming of the above shortcomings and for producing further advantages over prior art.

### BRIEF DESCRIPTION OF THE INVENTION

According to a first aspect, the invention is directed to a hermetic sample holder for electro-optical measurement of a sample as defined in claim 1. Different electrodes on the sample can be contacted without opening the holder cavity and keeping the sample isolated from environment inside the sample holder.

The invention comprises a cavity to host the sample and a clamp to fix the sample inside the cavity. The size of the cavity and clamp may be in accordance with sample size. The invention also comprises components forming an electric circuit for electro-optical measurements where the components are manipulating mechanisms for switching between electrical contacts on a sample from outside; electric junction to connect external electrical circuit to electrical components inside sample holder; electric connectors mounted on the insulators to connect to the sample electrodes. The invention also comprises sealing elements produced from rubber, elastomers, and other materials.

According to another aspect, the invention is directed to a method of switching of electrical contacts on a sample without violating tightness of the sample holder of the first aspect as defined in claim 4. The method comprises providing the sample holder in a glovebox filled with inert has; placing a sample of material into a cavity of the sample holder; fixing the placed sample by a clamp; positioning the electric connector in a desired position above certain group of electrical contact pads of the sample; sealing of the sample holder with a transparent lid; removing the sample holder from the inert gas environment; switching of electrical contacts on sample while maintaining the sample hermetically-sealed as part of operational readiness and operation in electro-optical measurement. This protects the sample from potential degradation caused by moisture in air and/or other constituents such as oxygen, carbon dioxide and like this. The design of sample holder derives from a structure of sample.

### BRIEF DESCRIPTION OF THE DRAWINGS

The invention is defined by the appended claims. The invention may be best understood by reference to the following detailed description of the invention, which describes exemplary embodiments, given in non-restrictive examples, of the invention, taken in conjunction with the accompanying drawings, in which:
Fig. 1 shows perspective view of preferred embodiment of the sample holder according to the invention.
Fig. 2 shows top view of a clamp for fixing the sample inside the sample holder.
Fig. 3a and 3b shows positioning mechanism of an electrical connectors with respect to the sample, where: 3a) is a top plan view of xy-positioning of the electrical connectors over the sample; 3b) a side view of the electrical connectors over the sample.
Fig. 4a and 4b shows a schematic depiction of structure of a typical sample, where: 4a) is a schematic side view of structure of layered sample; 4b) is a schematic top view of structure of the sample. The proportions in figures 4a and 4b are not maintained and represent only the core of the concept.
Fig. 5a, 5b and 5c shows sectional views of sealed connections, where: 5a) is a sealed connection of the lid and the holder's body with a first rubber gasket; 5b) is a sealed connection of the clamping plate, rod-manipulator and the holder body with a second and a third rubber gaskets; 5c) is a sealed mounting of the BNC type electric junction to the holder body.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention. The invention is defined by the appended claims.

The invention is directed to a sample holder (100) comprising a body (101) comprising side walls (102, 103, 104, 105) a bottom wall (106) and an open top face intended for closing with a lid (107). The side walls (102, 103, 104, 105) the bottom wall (106) and the open top face delimits a cavity for optimal placement of a sample (400). The sample holder (100) comprises a removable lid (107) for closing the cavity. The lid (107), preferably made of a transparent material, for example - plexiglass, comprises a first optical window (108). The first optical window (108) is a hermetically sealed quartz glass window. The first optical window (108) is for example rectangular shape and is 25 mm in length and 35 mm in width. The quartz glass is secured to the lid (107) using for example epoxy glue. The bottom wall (106) comprises a second optical window (109). The second optical window (108) is a hermetically sealed quartz glass window. The second optical window has a diameter of, for example, 25.4 mm. The quartz glass is secured to the bottom wall (106) using for example epoxy glue. The arrangement of two optical windows on opposite sides of the body (101) of sample holder (100) allows optical measurements in a light transmission mode. Each optical window (108, 109) is preferably made of a high-quality flat optical element with surface flatness ≥λ/4.

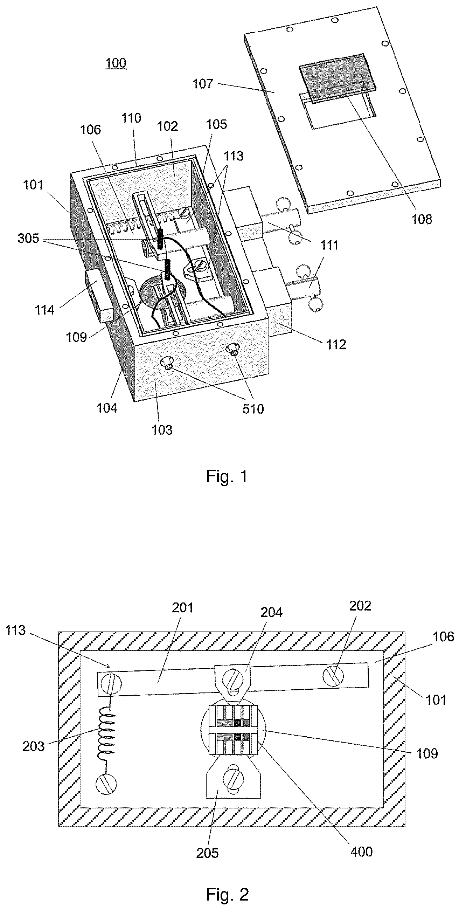

Optionally, the sample holder (100) inside the cavity comprises a clamp (113) for securing the sample (400) in the sample holder (100). In most applications, it may be necessary to secure the sample (400) inside the sample holder (100). According to one example of the invention and as shown in Fig. 2, the clamp (113) for securing the sample (400) comprises an elongated rectangular plate (201), preferably made from metal, one end of which pivots about a pivot axis (202) and other end connected by a tensile spring (203) to the bottom wall (106) of the sample holder (100). The elongated rectangular plate (201) comprises a plastic tip (204) for abutting one side of the sample (400). The elongated rectangular plate (201) is disposed so that it would be situated on one side of the second optical window (109), where the second optical window (109) is disposed essentially at the center of the bottom wall (106). The plastic tip (204) is adjustably disposed on the elongated rectangular plate (201) so that its position could be adjusted perpendicularly to the length of the elongated rectangular plate (201). The clamp (113) comprises a plastic stopper (205) adjustably fixed to the bottom wall (106) opposite the plastic tip (204) on opposite side of the second optical window (109). The plastic tip (204) and plastic stopper (205) are provided with oblong holes for adjusting the position of the clamp (113) depending on size of sample (400). The sample (400) is held above the second optical window (109) between plastic tip (204) and plastic stoper (205) exerting pressure to sides of the sample (400). The pressure is generated by the tensile spring (203). The plastic tip (204) and the plastic stopper (205) may have any size and shape depending on the size of the sample (400) to be tested.

The body (101) of the sample holder (100) has a rectangular box shape and is made from a single piece of metal, preferably aluminium. A one-piece metal body (101) reduces number of mating parts reducing probability of sealing loss of the sample holder (100).

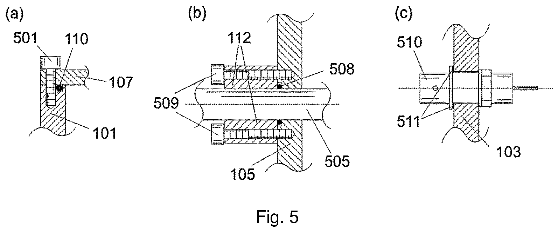

Between the transparent lid (107) and the aluminium body (101) a first rubber gasket (110) as shown in Fig. 1 and 5a is disposed in a notch. The notch is formed in top surface of walls (102, 103, 104, 105) of the body (101) for mating with the transparent lid (107). The first rubber gasket (110) is preferably a closed type O-ring. Additional lubrication between the lid (107) and the first rubber gaskets (110) is not necessary. The lid (107) is attached to the holder body (101) with screws (501), for example - ten in total, distributed around the top surface of the walls (102, 103, 104, 105) for mating with the lid (107).

The side wall (105) of the body (101) of the sample holder (100) comprises two openings for guiding metal rods (505), preferably having circular cross-section, of rod-manipulators (111). The rod-manipulators (111) each further comprises a handling end (301) protruding to outside the side wall (105) of the body (101) and an operation end (302) protruding to inside of the side wall (105) of the body (101). The metal rods (505) are movable linearly and rotationally through the openings in the wall (105). The operation end (302) comprises an elongated plastic insulator finger (303) adjustably secured to the operation end (302) of the metal rod (505). The elongated plastic insulator finger (303) first end (304) has an electric connector (305). The first ends (304) of the plastic insulator fingers (303) are directed to each other so that the electric connectors (305) of each plastic insulator finger (303) could be positioned over the sample (400) when the sample is secured in the sample holder (100) for investigation. Preferably when the sample (400) is secured between the plastic tip (204) and the plastic stopper (205). The plastic insulator fingers (303) can be slidably moved linearly with respect to each other so that position of the electric connectors (305) above the sample (400) could be adjusted.

From the outer side of the side wall (105), part of the protruding part of the rods (505) are enclosed in a clamping plate (112). The enclosed length of the rods (505) is such that the handling end (301) would be protruding from the clamping plate (112) for manual handling of the rod-manipulators (111). The clamping plate (112) secures a second and a third rubber gasket (508) respectively around each rod (505) between the wall (105) with openings and the clamping plate (112). The clamping plate (112) is tightly secured to the wall (105) with openings by screws (509), for example - four in total. The rubber gaskets (508) around each rod (505) are lubricated with vacuum grease and reliably isolate the inside cavity, where the sample (400) is secured, from the outside pressure, allowing the metal rods (505) to perform translational and rotational movements without loss of sealing. The sample holder (100) is optionally equipped with an electrical junction (510) for connecting the sample holder (100) to an external electrical circuit. The electrical junction (510) is preferably a BNC type junction specified for use with vacuum systems. The BNC junction (510) is mounted into openings of the side wall (103) and sealed with adhesive (511) (Fig. 5c). The electric connectors (305) are linked to the BNC junction (510) by flexible wires.

All technological threads and holes in the holder body (101) other than the openings for the rod-manipulators are blind avoiding any leakage from the sample holder (100) when it is hermetically closed.

On the wall (104) opposite the wall (105) with openings for metal rods (505) a metal plate (114) with an M6 tapped hole is attached and designed to be mounted on a stainless-steel posts for use on an optical table in a usual way.

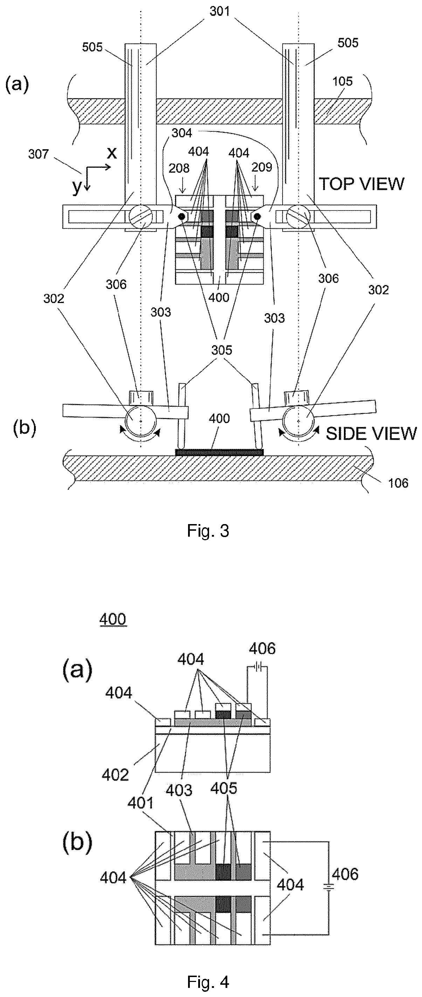

Fig. 3a and 3b demonstrates the principle of the spatial positioning of the electric connectors (305) in preferred position above groups (208,209) of the electrical contact pads (404) of the sample (400). Positioning of the electrical connectors (305) above groups of the required electrical contact pads (404) on the sample (400) is carried out in two stages. In the first stage the connectors (305) are set in one direction, and in the second- stage - in a perpendicular direction at any time during electro-optical measurement. First stage comprises setting position of each electrical connector (305) above a corresponding group (208, 209) of electrical contact pads (404) on the sample (400). For this purpose, the elongated plastic insulator fingers (303) on which the electric connectors (305) are mounted may be adjusted in x-direction (307) and fixed by screws (306) to the manipulators (111). For proper positioning of each electric connector (305), this adjustment may be required for each elongated plastic insulator finger (303). Each rod-manipulator (111), elongated plastic insulator finger (303) and electric connector (305) serve only one group (208, 209) of electrical contact pads (404) on the sample (400). In the second stage of positioning, each rod-manipulator (111) may be translated in *y-*direction (307) to achieve a certain contact pad among contact pads (404) in one particular group (208, 209) of electrical contact pads (404) on the sample (400). As an example, the number of groups (208, 209) of electrical contact pads (404) on the sample (400) corresponds to number of voltage supply rod-manipulators (111) of the sample holder (100). Switching between contact pads (404) is possible only between contact pads (404) within the same group.

The electrical connectors (305) are used to enable electrical connections to two oppositely separated groups (208, 209) disposed electrical contact pads (404) on the sample (400) enabling closed electrical circuit. For different geometric configuration of the electrical contact pads (404) on the sample (400), position of the electrical connectors (305) may be separately set according to arrangement of two linear groups (208, 209) of electrical contact pads (404) on a sample. Precise position of the connectors (305) with respect to linear groups is set outside the glovebox before inserting both, the sample (400) and the sample holder (100) inside the glovebox. For this, the elongated plastic insulator fingers (303), on which electric connectors (305) are mounted, are set to the required x-position (307) and fixed with a screw (306). Later, after sealing the body (101), x-position of the connectors (305) by translating the elongated plastic insulator fingers (303) is restricted. Outside the glovebox, the desired contact among contacts (404) in a certain group (208, 209) is achieved only by the movement of the rod-manipulators (111). Translation of the rod-manipulators (111) in the *y*-direction (307) and switching is possible only between contact pads (404) in respective groups (208, 209). Switching from one electrical contact pad to another in each group (208, 209) is carried out by rotating the rod-manipulators (111) until the connectors (305) disconnects from an unused electrical contact pad, and further by moving forward or backward, when the connector (305) reaches the required electrical contact, the connector (305) is lowered and connected to a new electrical contact pad by the rotational movement of the rod-manipulator (111). Positioning control is carried out visually via the transparent lid (107). During this operation the sample holder (100) remains sealed, and the switching between sample's electrical contact pads (404) through electro-optical measurements can be performed an unlimited number of times, maintaining the continuity of electro-optical measurements.

Fig. 4a and 4b shows schematic design of structure of a typical sample (400) suitable for investigation in a hermetically sealed sample holder (100) for electro-optical measurements. Structure of the sample (400) is deposited on indium tin oxide (401) coated glass substrate (402). Fig. 4a shows top view of layers of a functional material (403) and metal electrical contact pads (404) applied to the glass substrate (402). Between the layer of the functional material (403) and the electrical contact pads (404), there can be additional layers of other materials (405) performing charge carrier transport, blocking or other functions. Electrical contact pads (404) are usually located at edges of the sample (400) and are spatially separated one from another to which electrical voltage is applied. Depending on the architecture of the sample (400), electrical contact pads (404) can be located in different zones on the sample (400). According to one example the sample (400) is a glass substrate having thickness of 1 mm, length of 25.4 mm and width of 25.4 mm coated by materials forming the structure for measurements in the hermetic sample holder. An example of arrangement of the electrical contact pads (404) on the exemplary sample (400) is as shown in Fig. 4b. The electrical contact pads (404) form two groups on opposite sides of the sample (400) where each group is designated to contact with an electric connector, embedded in the sample holder. One group (208) of electrical contact pads supply voltage of one polarity, and other group (209) - to opposite polarity. When a voltage (406) is applied to a pair of opposing contact pads, an electric field is superimposed on the functional material (403), and changes of electric current caused by optical excitation of the sample are monitored by electrical measurements or vice versus changes of the optical properties caused by applied voltage are probed by optical beam passing the sample (400).

As an example, the distance between two electric connectors (305) in x-direction (307) may vary from 3 mm to 40 mm and suitable for samples with the same range of distances between linear groups of electrical contact pads on the sample. In *y*-direction (307) the position of electric connectors (305) may be adjusted within the translation range of the rod-manipulator (111), which, for example, moves in range up to 50 mm.

In one embodiment, the sample must meet the following requirements: 1) a hard, strong substrate, such as glass, no more than 25 mm wide and 25 mm long; 2) the functional area of the sample (optical dimensions) must not exceed the dimensions of the holder's optical windows.

In one embodiment, for samples formed on flexible substrate such as plastic, polymers and so on, the holder can also be adapted by using another method of sample fixation, for example by fixing it with the double-sided adhesive tape.

In one embodiment, when working with larger samples, the holder dimensions can vary. Also, the sample's electrical contact pads may have any shape and pattern that meet the accessibility of electric connectors of the sample holder criteria.

Although numerous characteristics and advantages together with structural details and features have been listed in the present description of the invention, the description is provided as an example fulfilment of the invention. Without departing from the scope of the invention as defined by the appended claims, there may be changes in the details, especially in the form, size and layout.

## Claims

1. A hermetic sample holder for electro-optical measurement comprising a hollow hermetically sealable body and an electric connector for measuring wherein the sample holder (100) comprises
a body (101) comprising side walls (102, 103, 104, 105) and a bottom wall (106) as a single piece of metal, wherein
the side walls (102, 103, 104, 105),
the bottom wall (106) and an open top face
delimit a cavity for optimal placement of a sample (400),
one side wall (105) comprises hermetically sealable openings for rod-manipulators (111), and
the bottom wall (106) comprises a hermetically sealed optical window (109),
a transparent lid (107) for hermetically closing the open top face of the body (101), wherein the transparent lid (107) comprises a hermetically sealed optical window (108),
sample (400) securing means (113) in the cavity,
a rubber gasket (110) between the transparent lid (107) and the body (101),
rod-manipulators (111), hermetically disposed in the openings of the side wall (105) and configured to be rotated and moved forward and backward,
wherein each rod-manipulator (111) comprises
a metal rod (505) having a handling end (301) protruding to outside the side wall (105) of the body (101) and an operation end (302) protruding to inside of the side wall (105) of the body (101), and
an elongated plastic insulator finger (303) adjustably secured to the operation end (302) of the metal rod (505), a first end (304) of the elongated plastic insulator finger (303) having an electric connector (305), for contact with electrical contact pads (404) on the sample (400),
a clamping plate (112), enclosing a length of the metal rods (505) on the outside of the wall (105) and securing a second and a third rubber gasket (508), one around each rod (505), between the wall (105) with the openings and the clamping plate (112),
wherein all technological threads and holes in the holder body (101) other than the openings for the rod-manipulators are blind.

2. The hermetic sample holder according to claim 1, wherein the optical windows (108, 109) are hermetic quartz glass windows having surface flatness ≥λ/4.

3. The hermetic sample holder according to claim 1 or 2, wherein the sample securing means (113) is a clamp (113), comprising an elongated rectangular plate (201), one end of the elongated rectangular plate pivoting about a pivot axis (202) and the other end being connected by a tensile spring (203) to the bottom wall (106) of the sample holder (100), wherein the elongated rectangular plate (201) comprises a plastic tip (204) for abutting one side of the sample (400), and a plastic stopper (205) adjustably fixed to the bottom wall (106) opposite the plastic tip (204) on an opposite side of the optical window (109) in the bottom wall.

4. A method of switching of electrical contacts on a sample without violating hermetic tightness of the sample holder (100) according to any of the previous claims, the method comprising
positioning, outside a glove box, the electric connectors (305) with respect to linear groups (208, 209) of electrical contact pads (404) of the sample (400) by setting, in a first stage, the elongated plastic insulator fingers (303), on which the electric connectors (305) are mounted, to an x-position (307) and fixing each with a screw (306),
securing a the sample (400) in the sample holder cavity,
positioning the sample holder (100) with the sample (400) in an inert gas environment in a glovebox and sealing hermetically the sample holder body (101) with the lid (107),
removing the sample holder (100) from the glovebox and mounting for electro-optical measurement,
positioning the electric connectors (305) of the rod-manipulators (111) above the linear groups (208, 209) of the electrical contact pads (404) of the sample (400) in two stages to enable electrical connections to two oppositely, in separated groups (208, 209) disposed electrical contact pads (404) on the sample (400), enabling closed electrical circuit, wherein in the first stage the electric connectors (305) are set in the x-direction, and in a second stage in a perpendicular *y*-direction at any time during the electro-optical measurement,
switching between electrical contact pads (404) within the same group (208, 209) by rotating the rod-manipulators (111) until the electric connector (305) disconnects from an unused electrical contact pad, and further by moving the rod-manipulators (111) forward or backward in the *y*-direction and, when the electric connector (305) reaches the required electrical contact pad (404), lowering the connector (305) and connecting it to a new electrical contact pad by rotating the rod-manipulator (111), wherein positioning control is carried out visually via the transparent lid (107).

## Patentansprüche

1. Hermetischer Probenhalter für elektrooptische Messung, umfassend ein hohles, hermetisch abdichtbares Gehäuse und einen elektrischen Verbinder zum Messen, wobei der Probenhalter (100) Folgendes umfasst:
ein Gehäuse (101), das Seitenwände (102, 103, 104, 105) und eine untere Wand (106) als ein einzelnes Metallstück umfasst, wobei
die Seitenwände (102, 103, 104, 105), die untere Wand (106) und eine offene Oberseite einen Hohlraum zur optimalen Platzierung einer Probe (400) abgrenzen,
eine Seitenwand (105) hermetisch abdichtbare Öffnungen für Stangenmanipulatoren (111) umfasst und
die untere Wand (106) ein hermetisch abgedichtetes optisches Fenster (109) umfasst,
einen transparenten Deckel (107) zum hermetischen Schließen der offenen Oberseite des Gehäuses (101), wobei der transparente Deckel (107) ein hermetisch abgedichtetes optisches Fenster (108) umfasst,
ein Sicherungsmittel (113) für die Probe (400) in dem Hohlraum,
eine Gummidichtung (110) zwischen dem transparenten Deckel (107) und dem Gehäuse (101),
Stangenmanipulatoren (111), die hermetisch in den Öffnungen der Seitenwand (105) angeordnet sind und dazu konfiguriert sind, gedreht und vorwärts und rückwärts bewegt zu werden, wobei jeder Stangenmanipulator (111) eine Metallstange (505) umfasst, die ein Handhabungsende (301), das zu der Außenseite der Seitenwand (105) des Gehäuses (101) vorsteht, und ein Betätigungsende (302), das zu der Innenseite der Seitenwand (105) des Gehäuses (101) vorsteht, aufweist und
einen länglichen Kunststoffisolierfinger (303), der verstellbar an dem Betätigungsende (302) der Metallstange (505) gesichert ist, wobei ein erstes Ende (304) des länglichen Kunststoffisolierfingers (303) einen elektrischen Verbinder (305) für den Kontakt mit elektrischen Kontaktflächen (404) auf der Probe (400) aufweist,
eine Klemmplatte (112), die eine Länge der Metallstangen (505) an der Außenseite der Wand (105) umschließt und eine zweite und eine dritte Gummidichtung (508), eine um jede Stange (505), zwischen der Wand (105) mit den Öffnungen und der Klemmplatte (112) sichert,
wobei sämtliche technischen Gewinde und Löcher in dem Haltergehäuse (101) mit Ausnahme der Öffnungen für die Stangenmanipulatoren blind sind.

2. Hermetischer Probenhalter nach Anspruch 1, wobei es sich bei den optischen Fenstern (108, 109) um hermetische Quarzglasfenster handelt, die eine Oberflächenebenheit von ≥λ/4 aufweisen.

3. Hermetischer Probenhalter nach Anspruch 1 oder 2, wobei es sich bei dem Sicherungsmittel (113) für die Probe um eine Klemme (113) handelt, die eine längliche rechteckige Platte (201) umfasst, wobei ein Ende der länglichen rechteckigen Platte um eine Schwenkachse (202) schwenkt und das andere Ende durch eine Zugfeder (203) mit der unteren Wand (106) des Probenhalters (100) verbunden ist, wobei die längliche rechteckige Platte (201) eine Kunststoffspitze (204) zum Anstoßen an eine Seite der Probe (400) und einen Kunststoffstopfen (205), der an der unteren Wand (106) gegenüber der Kunststoffspitze (204) auf einer gegenüberliegenden Seite des optischen Fensters (109) in der unteren Wand verstellbar befestigt ist, umfasst.

4. Verfahren zum Schalten zwischen elektrischen Kontakten auf einer Probe ohne Verletzung der hermetischen Dichtheit des Probenhalters (100) nach einem der vorhergehenden Ansprüche, wobei das Verfahren Folgendes umfasst:
Positionieren, außerhalb eines Handschuhfachs, der elektrischen Verbinder (305) in Bezug auf lineare Gruppen (208, 209) von elektrischen Kontaktflächen (404) der Probe (400) durch Einstellen, in einer ersten Stufe, der länglichen Kunststoffisolierfinger (303), auf denen die elektrischen Verbinder (305) montiert sind, auf eine x-Position (307) und Befestigen eines jeden mit einer Schraube (306),
Sichern der Probe (400) in dem Probenhalterhohlraum,
Positionieren des Probenhalters (100) mit der Probe (400) in einer Inertgasumgebung in einem Handschuhfach und hermetisches Abdichten des Probenhaltergehäuses (101) mit dem Deckel (107),
Entfernen des Probenhalters (100) aus dem Handschuhfach und Montieren für elektrooptische Messung,
Positionieren der elektrischen Verbinder (305) der Stangenmanipulatoren (111) oberhalb der linearen Gruppen (208, 209) der elektrischen Kontaktflächen (404) der Probe (400) in zwei Stufen, um elektrische Verbindungen zu zwei gegenüberliegenden, in getrennten Gruppen (208, 209) angeordneten elektrischen Kontaktflächen (404) auf der Probe (400) zu ermöglichen, wodurch ein geschlossener Stromkreis ermöglicht wird, wobei in der ersten Stufe die elektrischen Verbinder (305) in der x- Richtung und in einer zweiten Stufe in einer senkrechten y-Richtung zu jedem Zeitpunkt während der elektrooptischen Messung eingestellt werden,
Schalten zwischen elektrischen Kontaktflächen (404) innerhalb der gleichen Gruppe (208, 209) durch Drehen der Stangenmanipulatoren (111), bis sich der elektrische Verbinder (305) von einer unbenutzten elektrischen Kontaktfläche löst, und ferner durch Vorwärts- und Rückwärtsbewegen der Stangenmanipulatoren (111) in der y-Richtung und, wenn der elektrische Verbinder (305) die erforderliche elektrische Kontaktfläche (404) erreicht, Senken des Verbinders (305) und Verbinden desselben mit einer neuen elektrische Kontaktfläche durch Drehen des Stangenmanipulators (111), wobei Positionierungskontrolle visuell über den transparenten Deckel (107) ausgeführt wird.

## Revendications

1. Porte-échantillon hermétique pour mesure électro-optique comprenant un corps creux hermétiquement scellable et un connecteur électrique pour la mesure, le porte-échantillon (100) comprenant
un corps (101) comprenant des parois latérales (102, 103, 104, 105) et une paroi inférieure (106) en une seule pièce de métal, dans lequel
les parois latérales (102, 103, 104, 105), la paroi inférieure (106) et une face supérieure ouverte délimitent une cavité pour le placement optimal d'un échantillon (400),
une paroi latérale (105) comprend des ouvertures hermétiquement scellables pour des manipulateurs de tiges (111), et
la paroi inférieure (106) comprend une fenêtre optique hermétiquement scellée (109),
un couvercle transparent (107) pour fermer hermétiquement la face supérieure ouverte du corps (101), le couvercle transparent (107) comprenant une fenêtre optique hermétiquement scellée (108),
un moyen de fixation (113) de l'échantillon (400) dans la cavité,
un joint en caoutchouc (110) entre le couvercle transparent (107) et le corps (101),
des manipulateurs de tiges (111), disposés hermétiquement dans les ouvertures de la paroi latérale (105) et configurés pour être tournés et déplacés vers l'avant et vers l'arrière, dans lequel chaque manipulateur de tige (111) comprend une tige métallique (505) ayant une extrémité de manipulation (301) faisant saillie à l'extérieur de la paroi latérale (105) du corps (101) et une extrémité d'actionnement (302) faisant saillie à l'intérieur de la paroi latérale (105) du corps (101), et
un doigt isolant en plastique allongé (303) fixé de manière réglable à l'extrémité de fonctionnement (302) de la tige métallique (505), une première extrémité (304) du doigt isolant en plastique allongé (303) comportant un connecteur électrique (305), pour le contact avec des plots de contact électrique (404) sur l'échantillon (400),
une plaque de serrage (112), enfermant une longueur des tiges métalliques (505) à l'extérieur de la paroi (105) et fixant un deuxième et un troisième joint en caoutchouc (508), un autour de chaque tige (505), entre la paroi (105) avec les ouvertures et la plaque de serrage (112),
dans lequel tous les filetages et trous technologiques dans le corps de porte-échantillon (101) autres que les ouvertures pour les manipulateurs de tiges sont borgnes.

2. Porte-échantillon hermétique selon la revendication 1, dans lequel les fenêtres optiques (108, 109) sont des fenêtres hermétiques en verre de quartz ayant une planéité de surface ≥ λ/4.

3. Porte-échantillon hermétique selon la revendication 1 ou 2, dans lequel le moyen de fixation de l'échantillon (113) est une pince (113) comprenant une plaque rectangulaire allongée (201), une extrémité de la plaque rectangulaire allongée pivotant autour d'un axe de pivotement (202) et l'autre extrémité étant reliée par un ressort de traction (203) à la paroi inférieure (106) du porte-échantillon (100), la plaque rectangulaire allongée (201) comprenant une pointe en plastique (204) destinée à venir en butée contre un côté de l'échantillon (400), et un bouchon en plastique (205) fixé de manière réglable à la paroi inférieure (106) à l'opposé de la pointe en plastique (204) sur un côté opposé de la fenêtre optique (109) dans la paroi inférieure.

4. Procédé de commutation de contacts électriques sur un échantillon sans compromettre l'étanchéité du porte-échantillon (100) selon l'une quelconque des revendications précédentes, le procédé comprenant les étapes consistant à
positionner, à l'extérieur d'une boîte à gants, les connecteurs électriques (305) par rapport aux groupes linéaires (208, 209) de plots de contact électrique (404) de l'échantillon (400) en plaçant, dans une première étape, les doigts isolants en plastique allongés (303), sur lesquels sont montés les connecteurs électriques (305), dans une position x (307) et en les fixant chacun avec une vis (306),
fixer l'échantillon (400) dans la cavité du porte-échantillon,
positionner le porte-échantillon (100) avec l'échantillon (400) dans un environnement de gaz inerte dans une boîte à gants et sceller hermétiquement le corps du porte-échantillon (101) avec le couvercle (107),
retirer le porte-échantillon (100) de la boîte à gants et monter celui-ci pour la mesure électro-optique,
positionner les connecteurs électriques (305) des manipulateurs de tiges (111) au-dessus des groupes linéaires (208, 209) des plots de contact électriques (404) de l'échantillon (400) en deux étapes pour permettre les connexions électriques à deux plots de contact électriques (404) disposés de manière opposée, dans des groupes séparés (208, 209) sur l'échantillon (400), permettant un circuit électrique fermé, dans lequel dans la première étape les connecteurs électriques (305) sont placés dans la direction x, et dans une seconde étape dans une direction y perpendiculaire à tout moment pendant la mesure électro-optique,
commuter entre des plots de contact électrique (404) dans le même groupe (208, 209) en faisant tourner les manipulateurs de tige (111) jusqu'à ce que le connecteur électrique (305) se déconnecte d'un plot de contact électrique inutilisé, et en déplaçant en outre les manipulateurs de tige (111) vers l'avant ou vers l'arrière dans la direction y et, lorsque le connecteur électrique (305) atteint la plot de contact électrique requis (404), abaisser le connecteur (305) et le connecter à un nouveau plot de contact électrique en faisant tourner le manipulateur de tige (111), le contrôle de positionnement étant effectué visuellement via le couvercle transparent (107).
